# EUROPÄISCHE PATENTANMELDUNG

(11) **EP 3 078 936 A1**
(43) Veröffentlichungstag der Anmeldung: **12.10.2016**
(21) Anmeldenummer: 16154962.1
(22) Anmeldetag: 10.02.2016
(51) Int. Cl.: G01C 21/20

(54) **ERZEUGUNG EINER RICHTUNGSINFORMATION**

(30) Priorität: 10.04.2015 DE 102015206442
(71) Anmelder: ROBERT BOSCH GMBH, 70442 Stuttgart (DE)
(72) Erfinder: Haag, Frieder, 72827 Wannweil (DE)

(57) **Zusammenfassung**

Mit der vorliegenden Erfindung wird eine Verarbeitungseinheit zur Erzeugung einer Richtungsinformation bzw. einer Heading-Information, ein Verfahren, welches in dieser Verarbeitungseinheit abläuft sowie ein Fahrrad mit einer derartigen Verarbeitungseinheit beansprucht. Dabei werden zu zwei verschiedenen Zeitpunkten Standortinformationen erfasst, z.B. mittels eines GPS-Empfängers, und aus der Differenz der Standortinformationen die Richtungsinformation abgeleitet. Der Kern der Erfindung besteht dabei darin, dass zusätzlich eine Geschwindigkeitsgröße erfasst wird, z.B. die Geschwindigkeit eines Fahrzeugs, in dem sich die Verarbeitungseinheit befindet oder auch einfach des Empfängers der Standortinformationen. Die Erzeugung der Richtungsinformation und ggf. auch die Erfassung der zweiten Standortinformation zum späteren Zeitpunkt wird dabei in Abhängigkeit der Erkennung einer Bewegung vorgenommen.

## Beschreibung

Die Erfindung betrifft eine Verarbeitungseinheit, ein Fahrrad mit einer derartigen Verarbeitungseinheit sowie einem Verfahren zur Erzeugung einer Richtungsinformation in Abhängigkeit von erfassten Standortinformationen.

### Stand der Technik

Für Navigationszwecke ist es hilfreich, die Himmelsrichtung zu kennen. Eine Möglichkeit, die Himmelsrichtung zu bestimmen besteht darin, aus zwei Standortinformationen, z.B. GPS-Positionsdaten, per Differenzbildung die Himmelsrichtung abzuleiten.

Bei einer Reihe von Navigationsgeräten ist statt einer Berechnung der Himmelsrichtung ein elektronischer Kompass eingebaut, der sich am Erdmagnetfeld orientiert. Derartige elektronische Kompasse sind jedoch teuer und benötigen eine ständige Energieversorgung.

Es ist daher Aufgabe der Erfindung, eine Verarbeitungseinheit bzw. ein Verfahren zu beschreiben, welches auf effiziente Weise eine Richtungsinformation zur Verfügung stellt.

### Offenbarung der Erfindung

Mit der vorliegenden Erfindung wird eine Verarbeitungseinheit zur Erzeugung einer Richtungsinformation bzw. einer Heading-Information, ein Verfahren, welches in dieser Verarbeitungseinheit abläuft, sowie ein Fahrrad mit einer derartigen Verarbeitungseinheit beansprucht. Dabei werden zu zwei verschiedenen Zeitpunkten Standortinformationen erfasst, z.B. mittels eines GPS-Empfängers, und aus der Differenz der Standortinformationen die Richtungsinformation abgeleitet. Der Kern der Erfindung besteht dabei darin, dass zusätzlich eine Geschwindigkeitsgröße erfasst wird, z.B. die Geschwindigkeit des Fahrzeugs, in dem sich die Verarbeitungseinheit befindet oder auch nur des Empfängers der Standortinformationen. Die Erzeugung der Richtungsinformation und ggf. auch die Erfassung der zweiten Standortinformation zum späteren Zeitpunkt wird dabei in Abhängigkeit der Erkennung einer Bewegung vorgenommen.

Der Vorteil dieser Erfindung besteht dabei darin, dass die Ableitung der Richtungsinformation und/oder die Erfassung der für diese Richtungsinformation notwendigen zweiten Standortinformation, die jeweils mit einem Energieaufwand verbunden ist, nur in den Fällen durchgeführt wird, in denen tatsächlich über die Geschwindigkeitsinformation eine Bewegung und somit eine Veränderung der Richtung erkannt worden ist. Besonders vorteilhaft kann dabei sein, die Erfassung der Geschwindigkeitsinformation weitestgehend passiv zu gestalten, z.B. über einen Magnetschalter beim Vorder- oder Hinterrad eines Fahrrads. Dadurch wird bei einer Bewegung ein magnetischer Impuls erzeugt, der erfasst werden kann. Solange keine Bewegung stattfindet, zumindest in dem betrachteten Zeitraum, wird die Geschwindigkeit als Null angesehen. Als mögliche Zeiträume, in denen die Geschwindigkeit erfasst werden, können Zeiten von 0,5 bis 10 s verwendet werden. So kann in einem Beobachtungszeitraum von 10 s bei einem typischen Fahrrad eine Geschwindigkeit von unter 1 km/h bzw. 0,25 m/s erkannt werden, so dass auch ein normales Schieben des Fahrrads berücksichtigt werden kann.

Für die Erfassung der unterschiedlichen Standortinformationen ist vorgesehen, den gleichen Standortsensor zu verwenden, z.B. einen GPS-Empfänger. Darüber hinaus kann jedoch auch vorgesehen sein, dass eine der beiden benötigten Standortinformation durch einen Empfänger erfasst wird, der der Verarbeitungseinheit zugeordnet ist. Die zweite benötigte Standortinformation zur Ableitung der Richtungsinformation kann dagegen durch eine Funkverbindung zur Verfügung gestellt werden, z.B. als Folge einer Triangulation durch ein externes Gerät. Durch diese Ausgestaltung kann ggf. die benötigte Energie zur Erfassung der Standortinformationen weiter reduziert werden.

Um eine noch genauere Richtungsinformation bereitstellen zu können, kann in einer weiteren Ausgestaltung auch vorgesehen sein, dass bei einer erfassten Bewegung der Verarbeitungseinheit bzw. des Fahrrads, an dem die Verarbeitungseinheit angebracht ist, beide Standortinformationen abgefragt werden. Dadurch ergibt sich der Vorteil, dass auch eine zwischenzeitliche Bewegung, beispielsweise beim Tragen des Fahrrads über Treppen, bei der keine Geschwindigkeitsinformationen erzeugt werden, eine belastbare Richtungsinformation abgeleitet werden kann.

Besondere Vorteile bietet die Erfindung, wenn die erzeugte Richtungsinformation für Navigationszwecke verwendet wird.

Es ist jedoch auch möglich, dass die Richtungsinformation für den Fahrer ersichtlich auf einem entsprechenden Display angezeigt wird.

Weitere Vorteile ergeben sich aus der nachfolgenden Beschreibung von Ausführungsbeispielen bzw. aus den abhängigen Patentansprüchen.

### Kurze Beschreibung der Zeichnungen

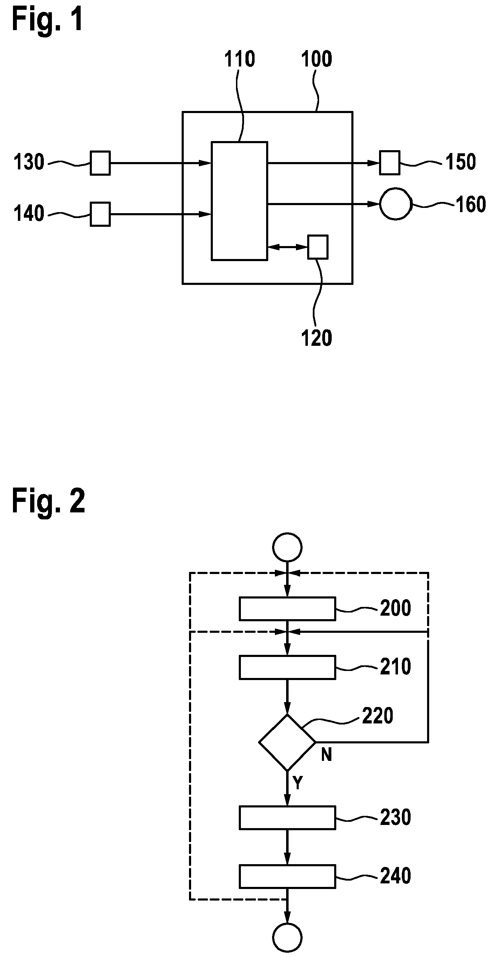

In der Figur 1 ist anhand eines Blockschaltbildes die erfindungsgemäße Verarbeitungseinheit dargestellt. Mittels des Ablaufdiagramms in der Figur 2 wird das erfindungsgemäße Verfahren, welches in der Verarbeitungseinheit abläuft, näher beschrieben.

### Offenbarung der Erfindung

Im vorliegenden Ausführungsbeispiel soll die Erfindung am Beispiel des Einsatzes bei einem elektrisch angetriebenen Fahrrads beschrieben werden. Darüber hinaus kann die Erfindung jedoch an jedem Fahrzeug verwendet werden, welches eine Geschwindigkeitsinformation liefert und bei dem eine Richtungsinformation bzw. Navigation eingesetzt werden kann.

Die Verarbeitungseinheit 100 der Figur 1 kann sowohl als eigenständiges Modul ausgestaltet als auch Teil eines Steuergeräts, eines Tachometers oder eines Navigationsgeräts sein.

In der Verarbeitungseinheit 100 ist ein µC 110 vorgesehen, der die Standortinformationen eines Standortsensors 130 erfasst. Typischerweise werden hier GPS-Daten eines GPS-Empfänger verwendet, wobei die Erfindung nicht auf diese Art von Standortdaten eingeschränkt sein soll. So kann beispielsweise auch vorgesehen sein, dass die Standortinformation durch Dritte mittels Triangulation über Funk mitgeteilt wird, wie es bei Smartphones üblich ist. Zusätzlich zu den Standortinformationen erfasst der µC 110 Geschwindigkeitsgrößen eines entsprechenden Sensors 140. Dabei kann es sich sowohl um einen Geschwindigkeitssensor handeln, der in Form eines Magnetsensors am Vorder- oder Hinterrad eines Fahrrads untergebracht ist oder auch um einen Beschleunigungssensor am Fahrrad, aus dessen Sensorgröße ebenfalls die aktuelle Geschwindigkeitsgröße abgleitet werden kann. Zum Zwischenspeichern der Standortinformationen sowie der Richtungsinformationen ist in der Verarbeitungseinheit 100 ein Speicher 120 vorgesehen.

Wird im µC 110 eine Richtungsinformation erzeugt, kann sie sowohl innerhalb des µC im Rahmen einer Navigation direkt verwendet werden oder an ein externes Navigationsgerät 150 abgegeben werden. Darüber hinaus ist jedoch auch eine Anzeige der Richtungsinformation auf einem entsprechenden Display160, welches der Verarbeitungseinheit oder dem übergeordneten Steuergerät/Tachometer/Navigationsgerät zugeordnet ist.

Zur genaueren Ausgestaltung des zugrunde liegenden Verfahrens zur Erzeugung der Richtungsinformation basierend auf den Standortinformationen und der Geschwindigkeitsgröße sei auf das Ablaufdiagramm der Figur 2 verwiesen.

Nach dem Start des Verfahrens wird im Schritt 200 eine erste Standortinformation erfasst. Diese Standortinformation kann aus einer dreidimensionalen Koordinate, wie es beispielsweise beim GPS der Fall ist, oder bei einer rein planaren Bewegung der Erfassung aus einer zweidimensionalen Koordinate bestehen. Im nächsten Schritt 210 wird eine Geschwindigkeitsgröße erfasst, die die Bewegung des zu betrachtenden Objekts repräsentiert. Im vorliegenden Ausführungsbeispiel wird mit einem am Vorderrad des Fahrrad befindlichen Magnetsensors die Drehgeschwindigkeit des Vorderrads erfasst, mittels dessen Messgrößen im Tachometer die Geschwindigkeit des Fahrrads abgeleitet wird. Für den betrachteten Fall ist der tatsächliche absolute Wert der Messgröße nicht relevant, da im Wesentlichen erfasst werden soll, ob das Fahrrad sich zwischen der Erfassung der ersten und der zweiten Standortinformation bewegt hat. Dementsprechend wird in Schritt 220 geprüft, ob der Betrag der Messgröße größer als Null ist. Ist dies nicht der Fall, hat sich das Fahrrad nicht bewegt, so dass die bisherige Richtungsinformation weiterhin Bestand hat und keine weitere Berechnung notwendig ist. In diesem Fall wird zum Schritt 210 verzweigt und erneut eine Messgröße erfasst. Alternativ kann auch in Abhängigkeit des Ergebnisses im Schritt 220 erneut eine erste Standortinformation erfasst werden. Wird jedoch im Schritt 220 festgestellt, dass eine Bewegung des Fahrrads erfolgt ist, wird mit dem Schritt 230 fortgefahren. Im Schritt 230 wird zur Ableitung der Richtungsinformation eine zweite Standortinformation erfasst, insbesondere durch die gleiche Vorrichtung wie die erste Standortinformation. Optional kann aber auch vorgesehen sein, dass die Standortinformationen aus verschiedenen Quellen stammen. Diese zweite Standortinformation wird mit der ersten Standortinformation verglichen und aus der Differenz im Schritt 240 zur neuen Richtungsinformation verknüpft. Anschließend kann das Verfahren erneut mit dem Schritt 200 oder dem Schritt 210 fortgesetzt werden. Es ist jedoch auch möglich, dass das Verfahren nach der Erzeugung der Richtungsinformation beendet wird.

Die so erhaltene neue Richtungsinformation liegt somit nach dem Schritt 240 als Information im System vor, beispielsweise im Speicher 120, und kann, wie bereits zur Figur 1 ausgeführt, intern verarbeitet oder an ein externes Gerät wie ein Navigationsgerät 150 oder einer Anzeige 160 weitergegeben werden.

Optional kann vorgesehen sein, dass die Schritte 210 und 220 zusammen ausgeführt werden, z.B. indem das Verfahren den Schritt 230 erst dann fortführt, wenn eine Bewegung erkannt wird. Hierbei können auch verschiedene Zeitkonstanten berücksichtigt werden, um extrem langsame Bewegungen von der Betrachtung auszuschließen oder dadurch gerade erst zu erfassen. Typische Werte für die Zeitkonstante im Schritt 210, die verwendet werden, um eine Bewegung beispielsweise eines Fahrrads in Ableitung der Impulse des Magnetschalters am Vorderrad zu erkennen, liegen im Bereich von 0,5 bis 10 s. So kann beispielsweise mit einer Erfassung innerhalb von 10 s eine Geschwindigkeiten von unter 1 km/h erfasst werden, so dass auch ein Schiebevorgang des Fahrrads detektiert werden kann. Für eine Anwendung, bei er lediglich die Richtungsinformation bei Fahrten des Fahrrads zur Verfügung gestellt werden soll, ist auch eine Verkürzung der Zeitdauer auf 0,5 bis 1 s möglich. Somit kann eine Änderung der Richtungsinformation schneller erfolgen.

Alternativ kann auch vorgesehen sein, dass die Zeitdauer, in der eine Bewegung erkannt wird, an die zuletzt erkannte Geschwindigkeit angepasst werden. So kann bei der Erkennung von langsamen Bewegungen, z.B. einem Schieben des Fahrrads, die Zeitdauer verlängert und bei einer Fahrradfahrt verkürzt werden.

Es sei darauf ausdrücklich darauf hingewiesen, dass diese Erfindung auch die Kombination der Merkmale der einzelnen Ausführungsbeispiele beansprucht.

## Patentansprüche

1. Verarbeitungseinheit (100) zur Erzeugung einer Richtungsinformation, wobei die Verarbeitungseinheit
• zu einem ersten Zeitpunkt eine erste Standortinformation erfasst, insbesondere eine erste GPS-Position, und
• zu einem nach dem ersten Zeitpunkt liegenden zweiten Zeitpunkt eine zweite Standortinformation erfasst, insbesondere eine zweite GPS-Position, und
• aus den erfassten Standortinformationen durch Differenzbildung eine Richtungsinformation erzeugt,
**dadurch gekennzeichnet, dass**
die Verarbeitungseinheit
• eine Geschwindigkeitsgröße erfasst und
• die Richtungsinformation abhängig von dem Vorliegen einer Geschwindigkeitsgröße größer Null erzeugt.

2. Verarbeitungseinheit (100) nach Anspruch 1, **dadurch gekennzeichnet, dass** die erste und zweite Standortinformation vom gleichen Standortsensor erfasst wird.

3. Verarbeitungseinheit (100) nach einem der vorhergehenden Ansprüche, **dadurch gekennzeichnet, dass** die zweite Standortinformation in Abhängigkeit des Vorliegens einer positiven Geschwindigkeitsgröße erfasst wird.

4. Verarbeitungseinheit (100) nach einem der vorhergehenden Ansprüche, **dadurch gekennzeichnet, dass** die erste Standortinformation in Abhängigkeit des Vorliegens einer positiven Geschwindigkeitsgröße erneut erfasst wird.

5. Verarbeitungseinheit (100) nach einem der vorhergehenden Ansprüche, **dadurch gekennzeichnet, dass** die Richtungsinformation zur Ableitung einer Navigationsinformation verwendet wird.

6. Verarbeitungseinheit (100) nach einem der vorhergehenden Ansprüche, **dadurch gekennzeichnet, dass** die Richtungsinformation ausgegeben wird, insbesondere über ein Anzeigemittel (160), welches mit der Verarbeitungseinheit (100) verbunden ist.

7. Fahrrad, insbesondere ein elektrisch angetriebenes Fahrrad, mit
• einer Verarbeitungseinheit nach einem der Ansprüche 1 bis 6, und
• einem Sensor, der in Abhängigkeit von der Bewegung des Fahrrads eine Geschwindigkeitsgröße erfasst,
wobei die Verarbeitungseinheit
• von einem Standortsensor zu einem ersten Zeitpunkt eine erste Standortinformation erfasst, insbesondere einer ersten GPS-Position, und zu einem nach dem ersten Zeitpunkt liegenden zweiten Zeitpunkt eine zweite Standortinformation erfasst, insbesondere einer zweiten GPS-Position, und
• aus den erfassten Standortinformationen durch Differenzbildung eine Richtungsinformation erzeugt,
**dadurch gekennzeichnet, dass**
die Verarbeitungseinheit zusätzlich
• eine Geschwindigkeitsgröße erfasst und
• die Richtungsinformation erzeugt, falls die Geschwindigkeitsgröße ungleich Null ist.

8. Verfahren zur Erzeugung einer Richtungsinformation, insbesondere in einer Verarbeitungseinheit nach einem der Ansprüche 1 bis 6 oder zur Verwendung an einem Fahrrad nach Anspruch 7, mit den Schritten
• Erfassung (200) einer ersten Standortinformation, insbesondere einer ersten GPS-Position, und
• Erfassung (230) einer zweiten Standortinformation, insbesondere einer zweiten GPS-Position, und
• Erzeugung (240) einer Richtungsinformation als Differenz der ersten und der zweiten Standortinformation,
**dadurch gekennzeichnet, dass** in einem weiteren Schritt eine Geschwindigkeit erfasst wird (210) und die Richtungsinformation in Abhängigkeit der Erkennung einer Geschwindigkeit größer Null erzeugt (240).

9. Verfahren nach Anspruch 8, **dadurch gekennzeichnet, dass** die zweite Standortinformation in Abhängigkeit des Vorliegens einer positiven Geschwindigkeitsgröße erfasst wird.

10. Verfahren nach Anspruch 8 oder 9, **dadurch gekennzeichnet, dass** die erste Standortinformation in Abhängigkeit des Vorliegens einer positiven Geschwindigkeitsgröße erneut erfasst wird.
